Europäisches Patentamt

European Patent Office

Office européen des brevets

(11) Publication number: **0 256 742 B1**

## EUROPEAN PATENT SPECIFICATION

(45) Date of publication of patent specification: **14.04.93**

(51) Int. Cl.5: **G01N 21/33**, G01N 21/47, G01N 33/34

(21) Application number: **87306870.4**

(22) Date of filing: **03.08.87**

(54) Method for measuring concentration of adhesive of coating layer surface.

(30) Priority: **04.08.86 JP 183067/86**
**07.07.87 JP 169506/87**

(43) Date of publication of application:
**24.02.88 Bulletin 88/08**

(45) Publication of the grant of the patent:
**14.04.93 Bulletin 93/15**

(84) Designated Contracting States:
**DE SE**

(56) References cited:
**US-A- 3 405 268**
**US-A- 3 770 354**

**IEEE TRANSACTIONS ON BIOMEDICAL EN-GINEERING, vol. BME-22, no. 6, November 1975, pages 528-532; J.B. POTTER et al.: "A spectrophotometer for the direct determination of sample extinction by simultaneous measurement at multiple wavelengths and application of Allen's correction"**

**PATENT ABSTRACTS OF JAPAN, vol. 11, no. 40 (P-544)[2487], 5th February 1987; & JP-A-61 209 339 (CHINO WORKS LTD) 17-09-1986**

**PAPER TECHNOLOGY AND INDUSTRY, vol. 25, no. 8, 1984-1985, pages 222-225; P.G. MERCER: "Measurement of extrusion coating"**

**R.G. MacDONALD et al.: "Pulp and paper manufacture", 2nd edition, vol. 2, 1969, McGraw-Hill, New York, US; "Control secondary fiber structural board coating"**

**TAPPI JOURNAL, vol. 70, no. 12, December 1987, pages 97-100; H. FUJIWARA et al.: "Ultraviolet absorption of styrene-butadiene latex on pigment-coated paper"**

(73) Proprietor: **JUJO PAPER CO., LTD.**
**No. 4-1, Oji 1-chome**
**Kita-ku Tokyo(JP)**

(72) Inventor: **Fujiwara, Hideki**
**No. 21-1, Oji 5-chome Kita-ku**
**Tokyo(JP)**

(74) Representative: **Heath, Derek James et al**
**BROMHEAD & CO. 19 Buckingham Street**
**London WC2N 6EF (GB)**

## Description

The present invention relates to a method for measuring the concentration of an adhesive on the surface of a coating layer coated on a support such as coated paper.

Pigment-coated paper is coated on the surface thereof with various types of pigments to improve the smoothness, brightness, ink receptivity, gloss and opacity thereof. To fabricate such coated paper, adhesives are used to bind pigment particles to each other and to stay the particles on the surface of coated base stock. The adhesive is prepared with a coating slurry, together with a pigment represented by clay and/or calcium carbonate, and is stayed on the surface of base stock.

When coatings are applied on porous materials such as paper, the adhesive can, however, sometimes cause a phenomenon (binder migration) wherein the adhesive moves excessively onto the surface of the coating layer or into the coat base paper direction during the drying step known per se. When the adhesive moves excessively on the surface of the coating layer and the concentration of the adhesive increases on the surface, it directly and adversely influences the printability, such as improper inking (print mottle) to the paper. When the concentration of the adhesive is mottled on the surface of the coating layer, an unallowable influence thereof is that the ink is mottled at the time that offset printing occurs. This adverse influence is because the adhesive itself has no affinity with printing ink.

It is therefore very important, from the above-mentioned circumstances, to know the concentration of the adhesive on the surface of the coating layer and the surface concentration distribution to evaluate the fabricating process management and the printability of coated paper. Thus, it is desired to develop a technique for accurately measuring the surface concentration of the adhesive and the surface concentration distribution.

There are heretofore known as a means for measuring the concentration of the adhesive on the surface of coating layer an infrared spectroscopic analysis, an X-ray microanalyzer and a photoelectric photometer. US-A- 3 770 354 shows such a photometer, but its method of operation is somewhat complicated. In contrast to this, the infrared spectroscopic analysis is simple but causes a large error due to much lower sensitivity of the adhesive than that of the pigment, so that it is insufficiently reliable in realization. The X-ray microanalyzer has, on the other hand, high sensitivity and can measure the distribution state of the adhesive on the surface of coating layer, but it necessitates dyeing with osmium, bromine and the following deposition as a pretreatment prior to the measurement, which means that it is expensive.

The Inventor of the present invention has examined the correlation between the adhesive concentration on the surface of coating layer of coated paper and the ultraviolet ray absorbance and has discovered that styrene-butadiene latex (SB latex) exhibits special absorbance in the ultraviolet ray zone of special wavelength and that the absorbance has much numerical difference from that of the pigment. He has therefore proceeded to apply the ultraviolet ray absorbance to the measurement of the concentration of the adhesive.

However, a reflection measurement of a light scattered on a sample surface must be employed in the measurement of the concentration of the adhesive on the surface of coating layer. Thus, when there are lights scattered on the surface state of the coating layer due to gloss, the measurement is affected by the scattered light and it is understood that correct concentration of the adhesive cannot be measured.

Accordingly, an aim of the present invention is to provide a method for measuring the concentration of the adhesive on the surface of a coating layer and its flat surface concentration distribution state by fundamentally measuring with ultraviolet rays to obtain the measured result having high reliability without influence of gloss or the like simply and rapidly. This aim is achieved by the method set forth in claim 1.

The Inventor of the present invention has confirmed the fact that the influence of the light scattered due to the surface state of a coating layer such as gloss is exclusively removed by a measurement with three wavelengths within absorption, wherein the peak absorption of the adhesive in the coating layer is a center of the quantitive surface concentration measurement.

The features of the invention will become more apparent from the following description of the preferred embodiments of the present invention when read in connection with the accompanying drawings, in which :

Fig. 1 is a graph showing the relationship between gloss of coating layer and absorbance corrected according to the present invention;

Fig. 2 is a graph showing the relationship between the gloss of the coating layer and the absorbance before correction;

Fig. 3 is a graph showing the relationship between the wavelength of the ultraviolet ray for the gloss and the absorbance;

Fig. 4 is a graph showing the ultraviolet absorbance of SB latex;

Fig. 5 is a graph showing the relationship between the adhesive concentration of the coating layer and the corrected absorbance; and

Fig. 6 is an explanatory view showing an example of the construction of an apparatus used for measuring according to the invention.

Embodiments of a method for measuring the concentration of the adhesive on the surface of coating layer according to the present invention will now be described in detail with reference to the accompanying drawings.

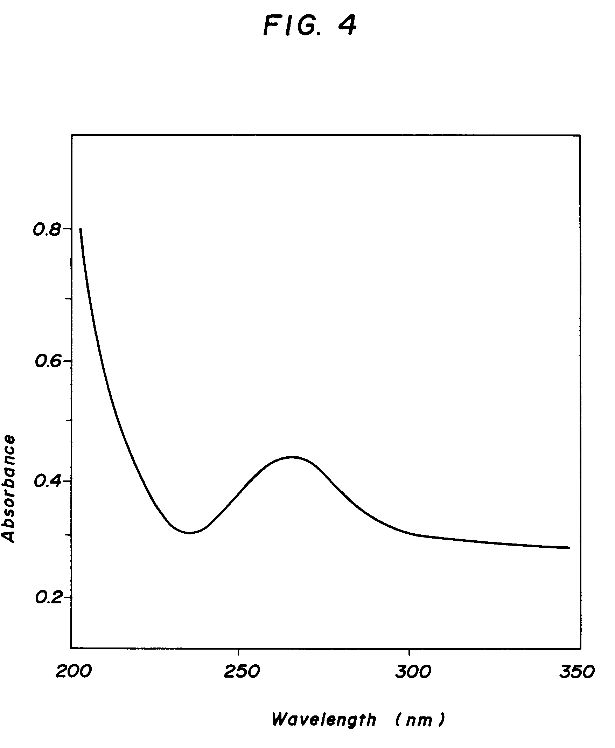

Fig. 4 is a graph showing the relationship between the wavelength and the absorbance of the ultraviolet ray of SB latex. In Fig. 4, it is understood that the absorption wavelength of the highest peak of the ultraviolet ray of the SB latex exists near 260 nm. Thus, when measuring the concentration of the SB latex, the ultraviolet ray having the wavelength near 260 nm must be used as the center of the three wavelengths. It is similarly the case when measuring the concentration of other adhesives, and the absorption wavelength of the highest peak must be confirmed in the ultraviolet ray to measure the concentration.

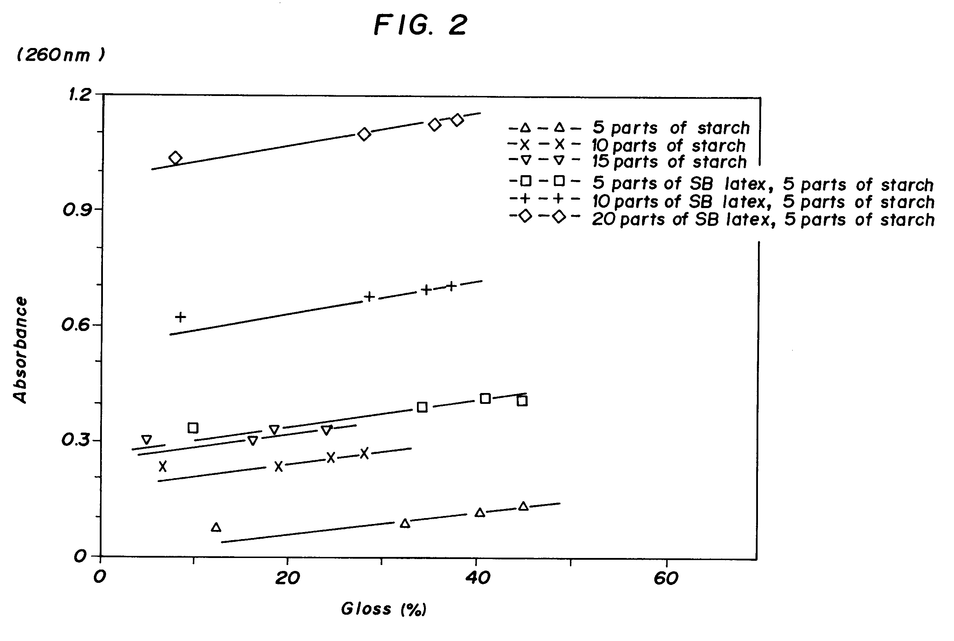

In the method of the present invention, the ultraviolet rays of shorter and longer wavelengths are used in addition to the ultraviolet ray of the absorption wavelength of the highest peak. As will be described with reference to Fig. 2, the reason for this is because a correct quantitative result cannot be obtained only by the ultraviolet ray of the absorption wavelength of the highest peak. Fig. 2 shows the relationship between the gloss and the absorbance of the ultraviolet ray having 260 nm of wavelength of coated paper using three types of stay solution mixed with 5 to 15 parts of starch to 100 parts of calcium carbonate pigment and three types of stay solution mixed with 5 parts of starch and 5 to 20 parts of SB latex. The absorbance of the reflected light having 260 nm of wavelength is affected by the gloss of the surface of coated paper and is also affected by the influence of the starch having no absorption originally in the ultraviolet ray. In this manner, it is to be understood that the correct quantitative result can not be obtained by the measurement with one wavelength. As seen in Fig. 2, the reason that the increase in the starch increases the absorbance is not always apparent, but it is considered that the absorbance is increased due to a variation in the scattering state of the light on the surface of coating layer due to a certain cause when the starch is increased.

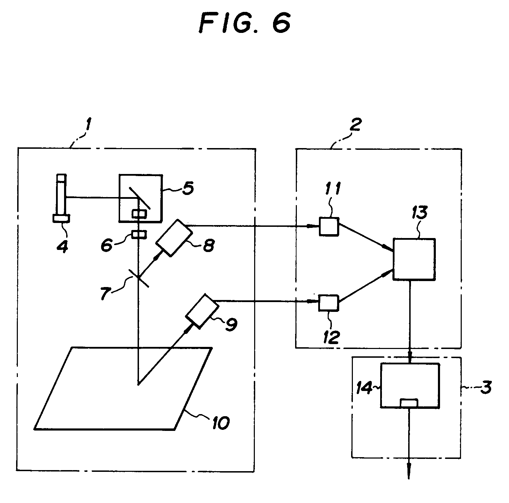

An embodiment of the construction of an apparatus used to measure the concentration of the adhesive on the surface of coating layer according to the present invention will be described in fig. 6. This apparatus comprises a detector 1, a converter amplifier 2, and an external output unit 3 as main components. The detector has Deutrium lamp 4, a filter 5, a diaphragm 6, a half mirror 7, a reference light electrophotomultiplier 8, a reflected light electrophotomultiplier 9 and a sample base 10.

To measure the concentration of adhesive on a coating layer, the ultraviolet ray irradiated from the Deutrioum lamp 4 is passed through the filter 5 into monochromatic light of specific wavelength. The monochromatic light is focused by the diaphragm 6 into a spot light, spectrally analyzed by the half mirror 7, partly photometered as a reference light by the reference light electrophotomultiplier 8, and the other light is reflected on the sample to be measured mounted on the sample base 10. Part of the reflected light is photometered by the reflected light electrophotomultiplier 9. The light is converted by the electrophotomultiplier into a current, and the resultant current is then converted by the operation amplifiers 11, 12 of the converter amplifier 2 into voltages. The converted voltages E1, E2 are subtracted by a subtractor 13 and converted by the analog-to-digital converter 14 of the external output unit 3 into a digital signal. The digitized signal is transferred to a data processor such as a computer or a recorder to be converted.

In the measurement of the present invention, the measured result which is not affected by the influence of other physical properties such as gloss can be quantitatively obtained by calculating to compare the optical densities of the three types of wavelengths including the absorption wavelength of the highest peak. THe removal of the influence of the gloss will be described in detail.

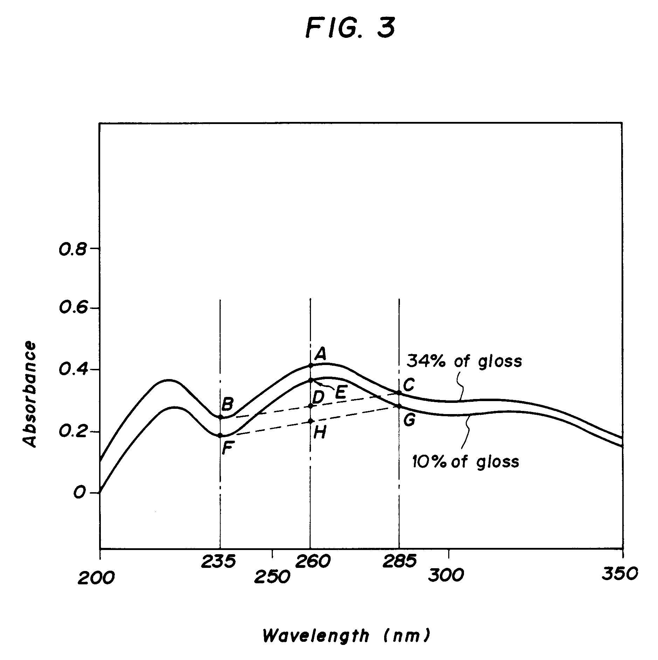

Fig. 3 shows the measured absorbance of the ultraviolet ray (200 to 350 nm of wavelength) prepared with 10% and 34 % of gloss by the difference of the degree of supercalendering with coated paper using stay solution mixed with 5 parts of starch and 5 parts of SB latex in 100 parts of calcium carbonate of coated paper shown in Fig. 2. From Fig. 3, it is to be seen that the apparent absorbance increases over the entire wavelength when the gloss increases irrespective of the coated paper of the same mixture.

When the curves of both the absorption spectra of 34% and 10% of gloss are designated by f(x) and g(x), the relationship between both the curves can be substantially represented by the equation f(x) - g(x) = ax + b. Therefore, base lines BC and FG are obtained from the measured values of 235 nm and 285 nm of the ultraviolet rays of shorter and longer wavelength sides at the absorption wavelength of 260 nm of the highest peak of the SB latex. The differences of the points D and H on the base lines in the wavelength of 260 nm and the measured values A and E of the wavelength of 260 nm become AD and EH, respectively. Here, as long as the relationship between the curves of both the spectra is represented by the equation f(x) - g(x) = ax + b, AD and EH exhibit the same value.

Thus, according to this base lines, the influence of the gloss can be removed. Even when the relationship between the curves of both the spectra is similar to the equation f(x) - g(x) = ax + b, AD is nearly equal to EH, and the influence of the gloss can be also substantially removed.

The equation for producing the base line will be described.

The absorbance at corrected 260 nm

$$= S_{260} - ((S_{285} - S_{235})/2 + S_{235})$$

where $S_{260}$, $S_{235}$, $S_{285}$ represent the apparent absorbance measured at 260, 235 and 285 nm of wavelengths.

In the present invention, the ultraviolet rays of the shorter and longer wavelength sides to the absorption wavelength of the highest peak may be arbitrarily set. In Fig. 3, the reason that 235 and 285 nm are selected is because of the convenience of calculations and the exclusion of the measuring error. More specifically, since 25 nm of wavelength are increased or decreased at 260 nm as a center, FG/FH = 2 is obtained for the convenience of calculation. When 235 nm which is not so farther from the highest peak and still clear minimum peak is used, the measuring error can be effectively suppressed.

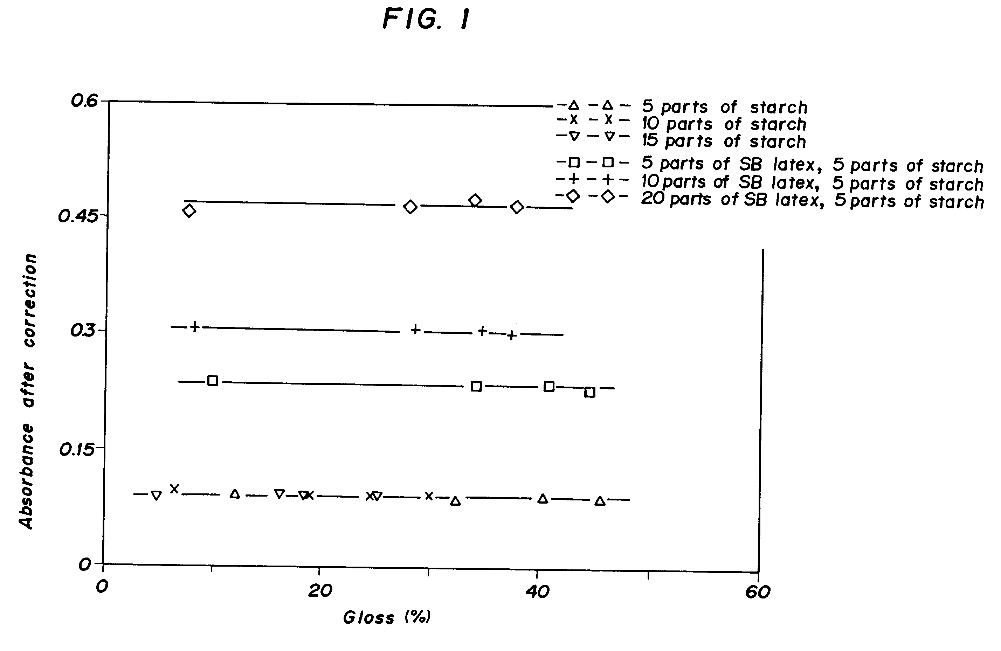

As described above, when Fig. 2 is corrected by the calculation in comparison to produce the base lines, the graph of Fig. 1 can be obtained on the basis of the value removed from the influence of the starch without influence of the gloss of the sample. The removal of the influence of the starch can be apparent from the fact that the values of the samples of starch of 5, 10 and 15 parts are plotted on the same line in Fig. 1.

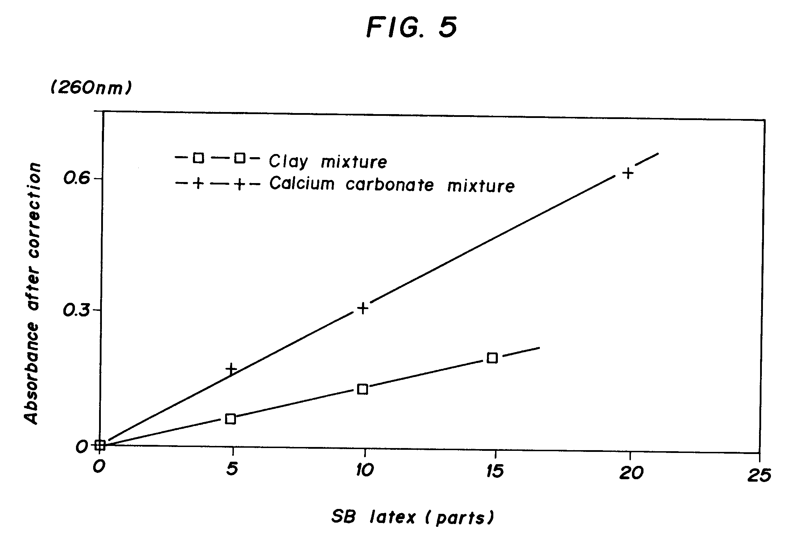

Fig. 5 shows the measurement of the surface of coating layer of coated paper fabricated by stay solution of 60 percents by weight mixed with 5, 10, 15 or 20 parts of SB latex to 100 parts of clay or calcium carbonate pigment. The stay amount of the sample was 10 g/m2 (dry weight), and only one side was stayed. The concentration of the SB latex is completely proportional to the absorbance after the correction. The reason that the slopes of linear lines are different depending upon the types of the pigments is because it is considered that the influence exists in the quantity of the SB latex presented together with the pigments on the surface of the coating layer from the difference of the shapes and sizes of the pigments. These measured values are obtained when the samples are superposed, a glass plate of ultraviolet ray absorption substance was lined on the sample, and a silica gel plate having no absorption of wavelength was lined. In all cases, the measured values were all the same, which proved the fact that no influence to the measurement of the concentration of the SB latex on the surface of the coating layer even if the ultraviolet ray in the measurement is not passed through the coated paper in this stay amount or even is passed.

The measurement of the adhesive distribution state on the surface of the coating layer will now be described. In this measurement, an apparatus capable of moving laterally and longitudinally relatively between the sample and the ultraviolet rays is required. For example, in the example of the apparatus in Fig. 6, the sample base 10 was moved laterally and longitudinally at a predetermined interval by using an XY stage having a stepping motor for the sample base 10.

The distributed state of the adhesive was measured in the following procedure by the apparatus constructed as described above. Examples of coated paper were coated with stay solution of 60% of solid concentration mixed with 100 parts of clay, 10 parts of SB latex 10 g/m2 (dry weight) on the surface of base paper, and were then allowed to stand for at room temperature by natural drying and hot blast drying. The samples were irradiated and measured with 235, 260 and 285 nm of wavelength of three types of fine ultraviolet light spots longitudinally at 4 mm interval and 60 mm of length, and laterally at 1 mm interval and 63 mm of length with the size of 0.4 mm x 0.4 mm of samples.

The average of the absorbance after correction of the sample by natural drying was 0.326, and its standard deviation was 0.004. The average of the absorbance after correction of the sample by hot blast drying was 0.432, and its standard deviation was 0.006. These measured results show that the SB latex moves onto the surface of the coating layer due to the abrupt hot blast drying and irregular distribution as compared with that of the natural drying. The result has explained the empirical fact that the printability of coated paper decreases when abrupt hot blast drying is executed. As described above, according to the method of the present invention, the surface concentration distribution of the adhesive on the coating layer can be measured.

A method of irradiating the ultraviolet ray of specific wavelength in the present invention will be further described supplementarily. The size of the fine ultraviolet ray spot is suitably selected from 0.01 to 2 mm of longitudinal and lateral sizes. When the adhesive distribution state on the surface of the coating layer is measured, the sample base and the spot are moved continuously laterally and longitudinally in the relative relationship. In this case, the size of the spot is determined by considering the area and the measuring interval of the samples. For example, when the sample of 50 cm2 is measured at an interval of 2 mm longitudinally and laterally, a satisfactorily-measured result can be obtained in the distributed state of the adhesive by using the spot of 0.5 mm laterally and longitudinally.

According to the present invention as described above, the adhesive concentration and the distributed state can accurately and rapidly measured without any influence of the scattered light caused on the irregular surface of the coating layer and without the necessity of a pretreatment by using the irradiating lights of the maximum absorption wavelength as well as shorter and longer wavelengths of the ultraviolet rays of the adhesive of the coating layer to be measured. This measuring method is not limited to the coated paper, but the surface analysis of all coating layers can be analyzed irrespective of the supports such as synthetic resin, metal or glass.

## Claims

1.  A method for measuring the concentration of adhesive on the surface of a coating layer coated on a support, characterised in that the method comprises the steps of :
    (a) irradiating ultraviolet ray of absorption wavelength of the highest peak, ultraviolet ray of shorter wavelength side and ultraviolet ray of longer wavelength side in the ultraviolet range of the adhesive of the coating layer to the surface of the coating layer; and
    (b) photoelectrically converting the reflected rays and measuring the concentration of the adhesive by carrying out the following substeps: (1) using absorbance measurements at the shorter and longer wavelengths to obtain a base line; (2) deducing from the absorbance measurement at the wavelength of the highest peak the corrected absorbance at this wavelength with respect to the base line; and (3) determining the concentration of the adhesive from this corrected absorbance.

2.  A method according to claim 1, wherein the coating layer adhesive is styrene-butadiene latex, the wavelength of the highest peak of the three types of ultraviolet rays to be irradiated is 260 nm, and the wavelength of the shorter wavelength side is 235 nm.

3.  A method according to claim 2, wherein the wavelength of longer wavelength side is 285 nm.

4.  A method according to any one of claims 1-3, wherein the support is paper.

5.  A method according to any one of claims 1-3, wherein the support is selected from a group consisting of synthetic resin, metal and glass.

6.  A method according to any one of claims 1-3, wherein the size of the irradiating spot of the ultraviolet ray is 0.01 mm to 2 mm laterally and longitudinally.

7.  A method according to any preceding claim, wherein the concentration of the adhesive of each coating layer surface is measured by scanning the irradiating spot of the ultraviolet ray on the surface of the coating layer.

8.  A method according to claim 1 which comprises the steps of :
    (a) irradiating ultraviolet ray of absorption wavelength of the highest peak, ultraviolet ray of shorter wavelength side and ultraviolet ray of longer wavelength side in the ultraviolet range of the adhesive of the coating layer to the surface of the coating layer to obtain the absorbance of the ultraviolet ray of each wavelength;
    (b) then obtaining the corrected absorbance of the ultraviolet ray of the absorption wavelength of the highest peak from the following equation :

    $$S_{cp} = S_p - ((S_L - S_S)/2 + S_S)$$

    where
    $S_{cp}$ is the corrected absorbance,
    $S_p$ is the absorbance of the ultraviolet ray of the absorption wavelength of the highest peak;
    $S_S$ is the absorbance of the ultraviolet ray of the shorter wavelength side, and
    $S_L$ is the absorbance of the ultraviolet ray of the longer wavelength side;
    (c) then comparing the corrected absorbance measured in advance with the concentration of the coating layer adhesive as relationship data to determine the concentration of the adhesive.

## Patentansprüche

1.  Verfahren zum Messen der Konzentration von Klebstoff auf der Oberfläche einer Überzugsschicht auf einer Unterlage, dadurch gekennzeichnet, daß das Verfahren die folgenden Schritte aufweist:

(a) Einstrahlen ultravioletter Strahlung der Absorptionswellenlänge der höchsten Spitze, Ultraviolettstrahlung kürzerer Wellenlänge und ultravioletter Strahlung längerer Wellenlänge in dem Ultraviolettbereich des Klebstoffs der Überzugsschicht auf die Oberfläche der Überzugsschicht; und

(b) Fotoelektrisches Umwandeln der reflektierten Strahlen und Messen der Konzentration des Klebstoffs durch Ausführen folgender Unterschritte: (1) Benutzen von Absorptionsmessungen bei der kürzeren und längeren Wellenlänge, um eine Basislinie zu erhalten; (2) Ableiten aus der Absorptionsmessung an der Wellenlänge der höchsten Spitze der korrgierten Absorption bei dieser Wellenlänge bezüglich der Basislinie; und (3) Bestimmen der Konzentration des Klebstoffs aus der korrigierten Absorption.

2. Verfahren nach Anspruch 1, dadurch gekennzeichnet, daß der Überzugsschicht-Klebstoff Styren-Butadien-Latex ist, wobei die Wellenlänge der höchsten Spitze der drei Arten einzustrahlender ultravioletter Strahlen 260 nm und die Wellenlänge auf der Seite kürzerer Wellenlängen 235 nm ist.

3. Verfahren nach Anspruch 2, dadurch gekennzeichnet, daß die Wellenlänge auf der Seite der längeren Wellenlängen 285 nm ist.

4. Verfahren nach einem der Ansprüche 1 bis 3, dadurch gekennzeichnet, daß die Unterlage Papier ist.

5. Verfahren nach einem der Ansprüche 1 bis 3, dadurch gekennzeichnet, daß die Unterlage aus der Gruppe von synthetischem Harz, Metall und Glas ausgewählt ist.

6. Verfahren nach einem der Ansprüche 1 bis 3, dadurch gekennzeichnet, daß die Größe des Strahlflecks der ultravioletten Strahlung 0,01 mm bis 2 mm lateral und longitudinal ist.

7. Verfahren nach einem der vorhergehenden Ansprüche, dadurch gekennzeichnet, daß die Konzentration des Klebstoffs jeder Überzugsschicht-Oberfläche gemessen wird durch Scannen des Strahlflecks der ultravioletten Strahlung auf der Oberfläche der Überzugsschicht.

8. Verfahren nach Anspruch 1, welches die Schritte umfaßt:

(a) Einstrahlen ultravioletter Strahlung der Absorptionswellenlänge der höchsten Spitze, ultravioleter Strahlung kürzerer Wellenlänge und ultravioleter Strahlung längerer Wellenlänge in dem Ultraviolettbereich des Klebstoffs der Überzugsschicht auf die Oberfläche der Überzugsschicht, um die Absorption der Ultraviolettstrahlung jeder Wellenlänge zu erhalten;

(b) Erhalten der korrigierten Absorption der Ultraviolettstrahlung der Absorptionswellenlänge der höchsten Spitze aus der folgenden Gleichung:

$$S_{cp} = S_p - ((S_L - S_S)/2 + S_S),$$

wobei $S_{cp}$ die korrigierte Absorption,
$S_p$ die Absorption der ultravioletten Strahlung der Absorptionswellenlänge der höchsten Spitze;
$S_S$ die Absorption der ultravioletten Strahlung auf der Seite der kürzeren Wellenlänge und $S_L$ die Absorption der ultravioletten Strahlung auf der Seite der längeren Wellenlänge ist; und

(c) Vergleichen der im voraus gemessenen korrigierten Absorption mit der Konzentration des Klebstoffs der Überzugsschicht als Bezugsdaten, um die Konzentration des Klebstoffs zu bestimmen.

**Revendications**

1. Procédé pour mesurer la concentration d'adhésif sur la surface d'une couche recouvrant un support, caractérisé en ce qu'il comprend les étapes qui consistent :

(a) à irradier la surface de la couche de rayons ultraviolets de la longueur d'onde d'absorption de la crête la plus haute, de rayons ultraviolets du côté des longueurs d'ondes plus courtes et de rayons ultraviolets du côté des longueurs d'ondes plus grandes dans la bande ultraviolette de l'adhésif de la couche ; et

(b) à soumettre à une conversion photoélectrique les rayons réfléchis et mesurer la concentration de l'adhésif en effectuant les sous-étapes suivantes qui consistent : (1) à utiliser des mesures du facteur d'absorption aux longueurs d'ondes plus courtes et plus grandes pour obtenir une ligne de base ; (2) à déduire de la mesure du facteur d'absorption à la longueur d'onde de la crête la plus haute le facteur d'absorption corrigé à cette longueur d'onde par rapport à la ligne de base ; et (3) à déterminer la concentration de l'adhésif à partir de ce facteur d'absorption corrigé.

**2.** Procédé selon la revendication 1, dans lequel l'adhésif de la couche est un latex de styrène-butadiène, la longueur d'onde de la crête la plus haute des trois types de rayons ultraviolets à irradier est de 260 nanomètres et la longueur d'onde du côté des longueurs d'ondes plus courtes est de 235 nanomètres.

**3.** Procédé selon la revendication 2, dans lequel la longueur d'onde du côté des longueurs d'ondes plus grandes est de 285 nanomètres.

**4.** Procédé selon l'une quelconque des revendications 1-3, dans lequel le support est du papier.

**5.** Procédé selon l'une quelconque des revendications 1-3, dans lequel le support est choisi dans un groupe constitué d'une résine synthétique, d'un métal et de verre.

**6.** Procédé selon l'une quelconque des revendications 1-3, dans lequel la dimension de la tache d'irradiation du rayon ultraviolet est de 0,01 à 2 mm latéralement et longitudinalement.

**7.** Procédé selon l'une quelconque des revendications précédentes, dans lequel la concentration de l'adhésif de chaque surface de la couche est mesurée par balayage de la tache d'irradiation du rayon ultraviolet sur la surface de la couche.

**8.** Procédé selon la revendication 1, qui comprend les étapes consistant :

(a) à irradier la surface de la couche avec un rayon ultraviolet d'une longueur d'onde d'absorption de la crête la plus haute, un rayon ultraviolet du côté des longueurs d'ondes plus courtes et un rayon ultraviolet du côté des longueurs d'ondes plus grandes de la bande ultraviolette de l'adhésif de la couche pour que l'on obtienne le facteur d'absorption du rayon ultraviolet de chaque longueur d'onde ;

(b) puis à obtenir le facteur d'absorption corrigé du rayon ultraviolet de la longueur d'onde d'absorption de la crête la plus haute à partir de l'équation suivante :

$$S_{cp} = S_p - ((S_L - S_S)/2 + S_S)$$

où
$S_{cp}$ est le facteur d'absorption corrigé,
$S_p$ est le facteur d'absorption du rayon ultraviolet de la longueur d'onde d'absorption de la crête la plus haute ;
$S_S$ est le facteur d'absorption du rayon ultraviolet du côté des longueurs d'ondes plus courtes, et
$S_L$ est le facteur d'absorption du rayon ultraviolet du côté des longueurs d'ondes plus grandes ;

(c) puis à comparer le facteur d'absorption corrigé mesuré à l'avance avec la concentration de l'adhésif de la couche en tant que données en relation pour déterminer la concentration de l'adhésif.

FIG. 1

EP 0 256 742 B1

FIG. 2

(260nm)

Absorbance

Gloss (%)

−△ − △ −  5 parts of starch
−x − x −  10 parts of starch
−▽ − ▽ −  15 parts of starch
−□ − □ −  5 parts of SB latex, 5 parts of starch
−+ − + −  10 parts of SB latex, 5 parts of starch
−◇ − ◇ −  20 parts of SB latex, 5 parts of starch

EP 0 256 742 B1

# FIG. 3

Wavelength (nm)

# FIG. 4

## FIG. 5

(260nm)

Absorbance after correction

−□—□− Clay mixture
−+—+− Calcium carbonate mixture

0.6

0.3

0

0    5    10    15    20    25

SB latex (parts)

EP 0 256 742 B1

## FIG. 6